# EUROPÄISCHE PATENTSCHRIFT

(11) **EP 2 018 583 B1**
(45) Veröffentlichungstag und Bekanntmachung des Hinweises auf die Patenterteilung: **07.08.2013**
(21) Anmeldenummer: 07722346.9
(22) Anmeldetag: 03.05.2007
(51) Int. Cl.: G02B 6/38

(54) **STECKVERBINDER MIT VORRICHTUNG ZUR KOMPENSATION VON LÄNGENAUSDEHNUNGEN EINES LICHTWELLENLEITERS**
PLUG CONNECTOR FOR AN OPTICAL FIBRE WITH DEVUCE FOR COMPENSATION OF ELONGATIONS OF AN OPTICAL FIBRE
CONNECTEUR ENFICHABLE COMPORTANT UN DISPOSITIF DE COMPENSATION DE DILATATION LINÉAIRE D'UN GUIDE D'ONDES OPTIQUES

(30) Priorität: 16.05.2006 DE 102006062695
(43) Veröffentlichungstag der Anmeldung: 28.01.2009
(73) Patentinhaber: Berger, Roland, 82131 Buchendorf/Gauting (DE)
(72) Erfinder: Berger, Roland, 82131 Buchendorf/Gauting (DE)
(74) Vertreter: Zeitler - Volpert - Kandlbinder
(86) Internationale Anmeldenummer: PCT/DE2007/000789
(87) Internationale Veröffentlichungsnummer: WO 2007/131471

(56) Entgegenhaltungen:
- DE-A1- 3 900 021
- GB-A- 2 032 130
- JP-A- 58 106 513
- US-A- 3 871 744
- US-A- 4 784 455
- US-A- 4 984 865
- US-A- 5 007 704
- US-A- 5 210 810
- US-A- 5 923 802

## Beschreibung

### Gebiet der Erfindung

Die vorliegende Erfindung betrifft einen Steckverbinder für einen Lichtwellenleiter, der eine Kabelzugentlastung aufweist und sich insbesondere für Lichtwellenleiter eignet, die zur Übertragung von Laserstrahlung vorgesehen sind.

### Stand der Technik

Steckverbinder für Lichtwellenleiter sind in vielfältigster Form bekannt. So ist zum Beispiel in der DE 44 12 571 C1 ein Steckverbinder offenbart, der unter materialschonender Biegung des mindestens einen Lichtwellenleiters (LWL) auch eine Kabelzugentlastung für diesen bietet. Die Zugentlastung wird hier durch scharfkantige Dorne bereitgestellt, die am Kabeleinlauf im oberen Bereich des Steckers vorgesehen sind und am Kabelmantel des LWL angreifen. Durch eine Siliconfeder soll eine axiale Bewegung des LWL ermöglicht werden, worauf aber nicht näher eingegangen wird. Es ist nur ersichtlich, dass das in den Stecker eintretende Kabel insgesamt in einem dafür vorgesehenen Raum Bewegungsfreiheit hat. Von einer Relativbewegung zwischen Kernfaser (mit Cladding) und Umhüllung ist nicht die Rede. Der gezeigte Steckverbinder ist außerdem zur Übertragung von optischen Signalen mit geringen Leistungspegeln gedacht, wobei hier eine Erwärmung der Kabelstrecke und Steckverbinder durch die übertragene Strahlenergie vernachlässigbar ist.

In EP 0 131 742 A2 ist ein LWL gezeigt, der fest mit einer Hülse verbunden (verklebt) wird. In sämtlichen gezeigten Ausführungsformen greift dabei eine Hülse 14 und/oder ein Klebstoff 16 nicht am eigentlichen LWL an, sondern an einem Silikon-Cladding 10.

DE 31 29 828 A1 beschreibt einen Steckverbinder für ein Lichtleiterkabel, mit einer axial verschiebbaren Lagerung der Enden von Lichtleitern im Buchsenträger eines Steckverbinders. Die Lichtleiter können entsprechend der Axialbewegung nachgeben, indem sie im Steckergehäuse in einem Freiraum spiralförmig angeordnet kind. Auch hier kann der Lichtleiter insgesamt nachgeben.

US 3 871 744 zeigt einen Steckverbinder für einen LWL, bei dem an einem "abisolierten" Teil der Lichtleitfaser eine Krümmung hergestellt wird. Abgesehen davon, dass die Herstellung einer solchen Krümmung im ungeschützten Teil der Faser sich äußerst ungünstig auf die Dauerfestigkeit der Faser auswirkt, kann dieser gekrümmte Abschnitt nur die Funktion haben, sich etwas mehr zu krümmen oder sich etwas weiter zu strecken, um mechanisch oder thermisch bedingte Längenausdehnungen aufzunehmen.

GB 2 032 130 A offenbart einen Steckverbinder für einen Lichtwellenleiter. Der Lichtwellenleiter umfasst eine Faser, die aus einem Kern und einem den Kern umgebenden Cladding besteht. Die Faser ist von einer ersten Schutzumhüllung aus Kunststoff umgeben. Die erste Schutzumhüllung wiederum ist von einer Lage Verstärkungsfasern und einer zweiten Schutzumhüllung umgeben. Der Steckverbinder selbst weist ein um 90° abgewinkeltes Gehäuse auf. An dem steckseitigen Ende des Steckverbinders ist ein von sämtlichen Umhüllungen befreiter Abschnitt der Faser in einer ersten Hülse gehalten. Diese erste Hülse ist fest in einer zweiten Hülse gehalten. Die zweite Hülse nimmt zudem eine dritte Hülse auf, die den vordersten Abschnitt der ersten Schutzumhüllung kraftschlüssig fixiert. Über die drei fest zueinander positionierten Hülsen sind auch die Faser sowie der erste Schutzmantel des Lichtwellenleiters fest zueinander positioniert. An dem der Steckseite des Steckverbinders abgewandten Ende ist der dortige Abschnitt des Lichtwellenleiters in einer Zugentlastung fixiert. Diese Zugentlastung umfasst einen Klemmkörper, dessen Außenseite konisch zulaufend und dessen Innenseite zahnförmig ausgebildet ist. Der Klemmkörper wird über einen Abschnitt des Lichtwellenleiters gestülpt, der das vordere Ende der Schutzumhüllung ausbildet. In diesem Abschnitt ist die Schutzumhüllung auch außenseitig von den Verstärkungsfasern umgegeben, da deren vordere Enden nach hinten umgeklappt wurden, so dass diese auf dem dortigen Abschnitt der Schutzumhüllung aufliegen. Durch ein axiales Einpressen des Klemmkörpers in eine konische Gegenfläche des Gehäuses wird der Klemmkörper radial komprimiert, wodurch der innerhalb des Klemmelements gelegene Abschnitt des Lichtwellenleiters fixiert wird. Das Gehäuse der Steckverbindung bildet in dem abgewinkelten Abschnitt eine Ausgleichskammer aus, die dazu dient, die Faser innerhalb des Steckverbinders vor von außen aufgebrachten Belastungen zu schützen. Dieser Schutz soll dadurch erreicht werden, dass sich der Radius des Verlaufs der Faser und der ersten Schutzumhüllung innerhalb des Ausgleichsraums in Abhängigkeit von außen aufgebrachten Belastungen verändern kann. Erforderlich ist diese Ausgleichsfunktion, da die zweite Hülse, die sowohl die erste Hülse als auch die dritte Hülse aufnimmt, über die wiederum sowohl die Faser als auch die erste Schutzumhüllung fixiert sind, über eine Feder vorbelastet sind. Über diese Federbelastung soll beim Anschließen des Steckverbinders an einen Gegenstecker ein definierter Andruck der Stirnfläche der in der Hülse gehaltenen Faser gegen ein entsprechendes Gegenelement erreicht werden. Beim Kuppeln des dargestellten Steckverbinders mit dem entsprechenden Gegenstecker wird somit die Einheit aus den drei Hülsen einschließlich des darin fixierten Abschnitts von Faser und erster Schutzumhüllung in Richtung des Ausgleichsraums, verschoben. Diese Bewegung des vordersten Abschnitts von Faser und Schutzumhüllung wird durch eine Krümmungsveränderung in dem Ausgleichsraum ausgeglichen.

Eine funktional ähnlicher Steckverbinder für einen Lichtwellenleiter ist zudem in der US 5,210,810 offenbart. Auch dort ist der Lichtwellenleiter an einem Ende eines Gehäuses des Steckverbinders über seine äußere Schutzhülse fixiert und an dem anderen, steckseitigen Ende ist die von der Schutzhülse befreite, jedoch noch mit einer ersten Umhüllung versehene Faser in einer federbelasteten, axial in dem Gehäuse verschiebbaren Hülse fixiert. Zwischen den Hülsen ist die Faser (mit erster Umhüllung) S-förmig geführt. Durch eine Krümmungsveränderung kann die Axialverschiebung der steckseitigen Hülse ausgeglichen werden.

Bei der Übertragung von Strahlung hoher Energie (zum Beispiel bei der Übertragung von Laserstrahlung von einer Strahlquelle zu einer Bearbeitungsstation) liegt eine Strahlenergie im Kilowattbereich vor. Diese Energie wird über einen LWL geführt, der typischerweise Durchmesser von 300 bis 600 µm hat. Ein LWL besteht im wesentlichen aus einer Kernfaser (Core) und einer umgebenden Umhüllung (Cladding), die beide aus Quarzglas bestehen. Daran schließt sich eine Silikonmasse an, und als äußerste Schicht wird vielfach eine Kunststoffummantelung verwendet. Der Strahl läuft normalerweise in der Kernfaser; sitzt die Strahlung nicht mittig im Core, findet ein Energieeintrag in das Cladding statt. Die auf die hohe übertragene Energie zurückzuführende Erwärmung verursacht eine unterschiedliche Längenausdehnung dieser beteiligten Materialien. Bei einem sich erwärmenden LWL wird sich also die äußere Umhüllung um ein Vielfaches mehr ausdehnen als der Kern und Mantel aus Quarzglas, was vor allem bei Steckverbindern zu großen Problemen führt. Auch Veränderungen der Luftfeuchtigkeit können infolge eines minimalen "Aufquellens" der Kunststoffe zu unterschiedlichem Ausdehnungsverhalten führen. Das Ausdehnungsverhalten der beteiligten Werkstoffe kann bis zu einem Faktor von 80 differieren.

Es ist deshalb eine Aufgabe der Erfindung, einen Steckverbinder für einen LWL zu schaffen, der nicht nur eine Zugentlastung für das empfindliche Lichtwellenleiterkabel aufweist, sondern auch die Möglichkeit zur Kompensierung der Längenausdehnungen der verschiedenen Materialien.

Diese Aufgabe wird durch einen Lichtwellenleiter mit den Merkmalen gemäß Anspruch 1 gelöst.

### Kurze Beschreibung der Zeichnungen

Figur 1 zeigt schematisch eine Übertragungsstrecke für Strahlungsenergie, mit einem Einlass und einem Auslass für die Strahlung;
Figur 2 zeigt einen erfindungsgemäßen Steckverbinder;
Figuren 3a und 3b zeigen verschiedene Möglichkeiten zur Kompensation der unterschiedlichen Wärmeausdehnungen; und
Figur 4 zeigt in einer vergrößerten Ansicht den in Fig. 2 mit X bezeichneten Bereich.
Figur 5 zeigt einen Querschnitt durch einen kompletten Lichtwellenleiter in schwerer Schutzausführung mit diversen Schutzschläuchen.

### Ausführliche Beschreibung der Erfindung

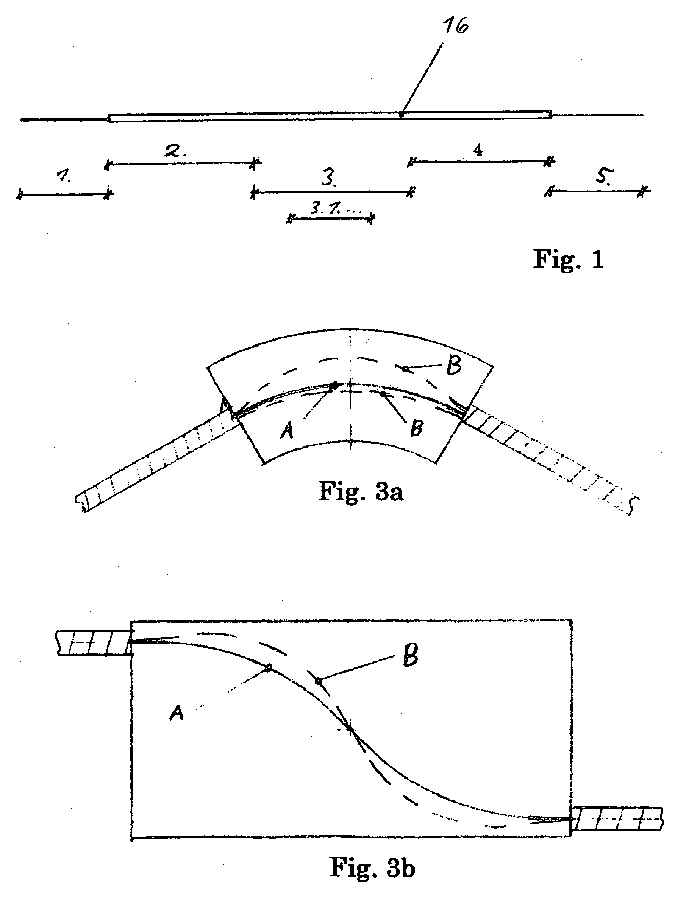

Fig. 1 zeigt in stark schematisierter Form eine Übertragungsstrecke für Strahlungsenergie. Es sei angenommen, dass im Bereich 1 ein LWL vorhanden ist, der aus einer Strahlquelle wie z.B. einem Festkörperlaser herausführt. Es sollte klar sein, dass die hier betrachteten LWL für die Übertragung dieser Art von Strahlung geeignet sind und dementsprechend verlustarm arbeiten. Beispiele für in Frage kommende Festkörperlaser sind YAG-Laser und Excimer-Laser. Der genaue Aufbau des eigentlichen Wellenleiters aus Quarzkern und Quarzumhüllung ist für die Erfindung nicht wesentlich, weshalb auch nicht näher hierauf eingegangen wird.

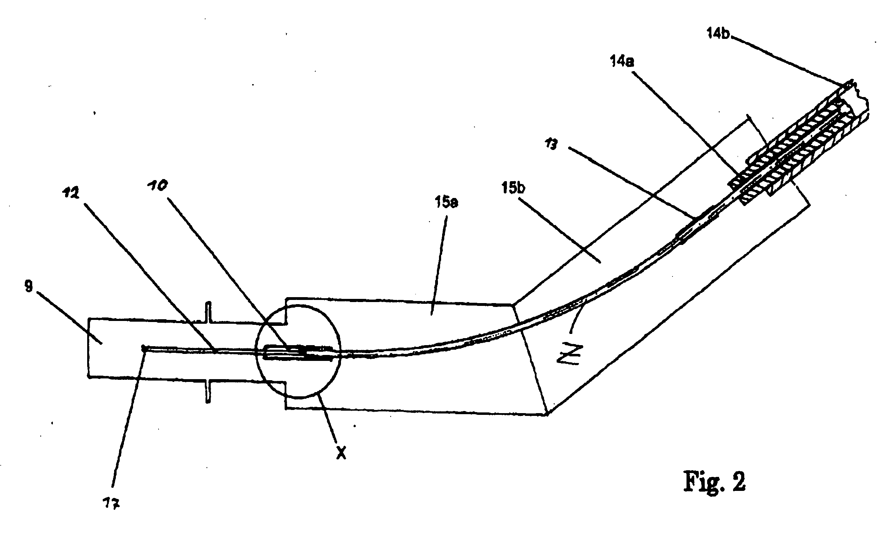

Am Übergang zwischen Bereich 1 und 2 findet sich ein Steckverbinder, wie er in Fig. 2 gezeigt ist und nachstehend genau beschrieben werden wird. Die in Fig. 1 dargestellten Bereiche 2 bis 4 symbolisieren eine Übertragungsstrecke, die bis zu 80 m lang sein kann. In der Praxis bestehen Längen von typischerweise 3 bis 15 m. Auf die in der Zeichnung vorgenommene Unterteilung dieser Strecke in die Bereiche 2 bis 4 wird später noch Bezug genommen. Am in Fig. 1 gezeigten rechten Ende der Übertragungsstrecke ist am Übergang von Bereich 4 zu Bereich 5 wiederum ein Steckverbinder vorgesehen, wie sie in Fig. 2 gezeigt ist.

Der in Fig. 2 dargestellte Steckverbinder besteht im Wesentlichen aus einem Gehäuse aus Metall und/oder Kunststoff, das in zwei Gehäuseabschnitte 15a und 15b geteilt ist. Wie dem Fachmann hinlänglich bekannt ist, sind solche Gehäuse geteilt, um einen LWL darin einlegen zu können.

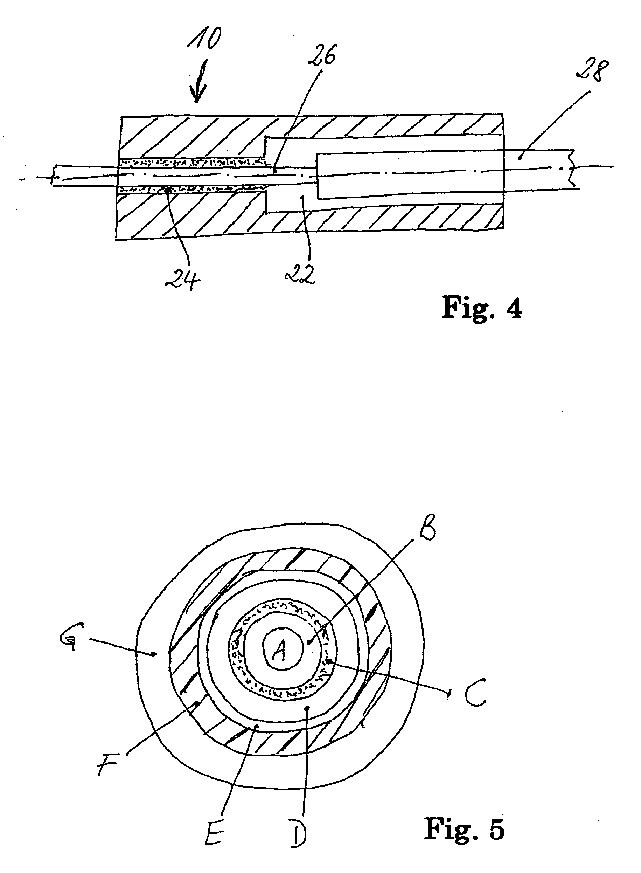

In diesem Gehäuse ist ein Freiraum geschaffen, in dem sich der LWL geringfügig bewegen kann. Die Bewegung des LWL findet dabei in einem Bereich Z statt. Mit "Bewegung" ist eine aus einer Relatiwerschiebung zwischen Umhüllung 28 und Wellenleiter (im Zusammenhang mit Fig. 4 genauer beschrieben) resultierende Krümmungsänderung des LWL gemeint. Die Gehäuseteile 15a und 15b bilden einen Winkel miteinander, der vorzugsweise zwischen 90° und 180° liegen kann. Mit 17 ist ein Strahleingang bezeichnet, in den z. B. ein Laserstrahl einläuft, der von einer Strahlenquelle erzeugt wird. Das vorderste Ende des LWL ist "abisoliert", also von seiner Umhüllung 28 befreit. Mit der Bezugszahl 10 ist eine (Führungs- und Befestigungs-)Hülse für den LWL bezeichnet, die im Allgemeinen aus hochlegiertem Stahl oder einer Aluminiumlegierung besteht.

Fig. 4 zeigt den Aufbau aus Hülse 10 und LWL genauer. Die Hülse 10 umschließt den LWL am Ende der Umhüllung 28. Der eigentliche Wellenleiter, d.h. der Kern und der Quarzmantel des LWL, ist mit 26 bezeichnet. Die Hülse 10 weist ferner einen Hohlraum 22 auf, der die Umhüllung 28 des LWL mit Abstand umgibt. Mit 24 ist ein hochfester wärmebeständiger Klebstoff bezeichnet, wie er auf diesem Fachgebiet bekannt ist. Mit diesem Klebstoff 24 wird der Wellenleiter 26 des LWL bei der Montage fest mit der Hülse 10 verklebt. Wellenleiter 26 und Hülse 10 können auch auf irgendeine andere herkömmliche Art aneinander befestigt werden. Die Umhüllung 28 hingegen kann sich in axialer Richtung in Bezug auf Wellenleiter 26 und Hülse 10 verschieben, wodurch eine Möglichkeit des Längenausgleichs der sich verhältnismäßig stark ausdehnenden Umhüllung 28 gegeben ist.

Die Hülse 10 hat hier eine Doppelfunktion. Zum einen dient sie der Fixierung des Wellenleiters 26 relativ zu einem Endteil 9 des Gehäuses, und zum anderen nimmt sie die Längenausdehnung der LWL-Umhüllung 28 auf. Es ist eine unabdingbare Voraussetzung für den ordnungsgemäßen Betrieb des LWL, dass der Wellenleiter 26 mit hoher Genauigkeit mittig und positionsgenau im Endteil 9 sitzt. Einmal in der Hülse verklebt, sollte der Wellenleiter 26 die eingenommene Position relativ zur Hülse 10 nicht mehr verlassen. Anstatt der Hülse 10 zur Längsfixierung kann auch z.B. ein Kegelprisma oder ein anderweitiges optisches Bauelement aus transmittierendem Material, vorzugsweise Quarzglas, als Längenanschlag dienen. Hier sei auf die Patentschrift DE 100 33 785 C2 desselben Anmelders verwiesen.

Wiederum mit Bezug auf Fig. 2 ist eine zweite Hülse 13 zu sehen, die, anders als die Hülse 10, nicht mit dem Wellenleiter 26 des LWL, sondern mit seiner Umhüllung 28 fest verklebt oder anderweitig damit verbunden ist. Die Hülse 13 wiederum ist unverrückbar mit dem Gehäuseteil 15b verbunden. Bekannte Verbindungen umfassen Klebeverbindungen, Schellenverbindungen, Schraubverbindungen usw. Während der Montage ist die Hülse 13 verschieb- und drehbar, wodurch beim Montieren die Abstrahlcharakteristik eingestellt wird (Microbanding). Diese Hülse 13 stellt eine Kabelzugentlastung dar. Aus dem Gehäuseteil 15b tritt der mit im Regelfall zwei Schutzschläuchen 14a, 14b versehene LWL aus. Der Schutzschlauch 14a besteht im Allgemeinen aus Kunststoff (z.B. PA), während es sich bei dem Schutzschlauch 14b um einen Metallschutzschlauch (ähnlich einem Bowdenzug) handeln kann. Im Prinzip ist mit Fig. 2 erklärt, wie ein Längenausgleich zwischen der Umhüllung 28 und dem Wellenleiter 26 zwischen den beiden Hülsen 10 und 13 stattfinden kann.

Bei dem rechts in Fig. 2 gezeigten Querschnitt des LWL beginnt die eigentliche Übertragungsstrecke, die wie zuvor beschrieben durchaus Längen bis 80 m erreichen kann. Am Ende dieser Übertragungsstrecke befindet sich wieder ein Stecker, wie er in Fig. 2 gezeigt ist. Dieser zweite Stecker ist dann z.B. an einen Bearbeitungskopf angeschlossen, der die Strahlenergie zum Schneiden, Schweißen, Beschriften, Abtragen usw. an die gewünschte Stelle führt. Der Aufbau des zweiten Steckers ist derselbe wie der in Fig. 2 gezeigte: Der Laserstrahl läuft durch den LWL hindurch und tritt bei 15b in das Steckergehäuse ein. Bei 13 ist der LWL durch die Kabelzugentlastung entlastet. Die Hülse 10 sorgt für die Fixierung des Wellenleiters 26, und bei 17 ist der Austrittsort des Laserstrahls, welcher exakt in der Position zum Stecker bzw. Endteil 9 gehalten wird.

Fig. 5 zeigt einen Querschnitt durch einen kompletten Lichtwellenleiter mit den diversen Umhüllungen. Die Kernfaser A ist das Element, durch welches der Licht- oder Laserstrahl hindurch läuft. An der Grenzfläche zwischen Kernfaser A und Cladding B wird der Strahl reflektiert und so innerhalb der Kernfaser A gehalten. Ein leichter Energieeintrag in das Cladding B ist jedoch im praktischen Einsatz nie ganz auszuschließen. Daran schließt sich eine aus Silikonmasse bestehende Hüllschicht C an. Über dieser Hüllschicht C befindet sich ein Schutzschlauch D, der meistens aus Nylon/PA besteht und Fachleuten als "Jacket" bekannt ist. Das Jacket D ist mit einem Luftspalt E von einem weiteren Schutzschlauch F aus Kunststoff umgeben; hier handelt es sich meist um PU-Material. Zuletzt ist als äu-βerste Schicht ein Schutzmantel G aus Metall vorgesehen, der ähnlich wie bei einem Bowdenzug ausgebildet ist.

Fig. 3a und 3b erläutern einen möglichen Verlauf des LWL in einem Gehäuse eines Steckverbinders analog zu Fig. 2. Zwischen Eintritt in den Steckverbinder und Austritt aus diesem kann der LWL in alle Achsen ausweichen, also einen oder mehrere Radien in allen Raumrichtungen bilden. Theoretisch ist auch eine Führung des LWL in der Art einer Spirale möglich.

Es ist natürlich möglich, je nach den Einsatzbedingungen die Übertragungsstrecke in mehrere Bereiche zu unterteilen, wie es in Fig. 1 mit den Bereichen 2 bis 4 gezeigt ist. An den Übergängen von Bereich 2 zu 3 und Bereich 3 zu 4 kann sich jeweils ein wie in Fig. 3a oder 3b beschriebener Steckverbinder befinden, wobei hier aber ein Längenausgleich zwischen dem Jacket D und dem PU-Schutzschlauch F stattfinden kann, d.h. es findet eine Relativverschiebung zwischen den Positionen D und F statt. Im Gegensatz dazu ist im Steckverbinder gemäß Fig. 2 eine Relativbewegung zwischen den Positionen B und C bis D ermöglicht.

Die vorliegende Erfindung kann vorteilhafter Weise auch in so genannten Faserlasern eingesetzt werden, in denen der Laserstrahl direkt in einer Wellenleiterfaser erzeugt wird. Hier treten die Vorzüge der Erfindung besonders zutage, da Faserlaser im Betrieb eine hohe Temperatur entwickeln und notwendigerweise noch grö-βere unterschiedliche Wärmeausdehnungen der Fasermaterialien zu bewältigen sind.

Das Phänomen des so genannten Mikrobending und das Abstrahlverhalten werden konstant gehalten. Das heißt, dass Bewegungen und Verbiegungen am LWL mit seinen Schutzschläuchen keine Wirkung auf das Abstrahlverhalten und seine Modenbildung haben.

## Patentansprüche

1. Übertragungsstrecke für Laserstrahlung oder anderweitige Strahlung (Licht) mit einem Lichtwellenleiter und mindestens einem Steckverbinder mit einem Gehäuse, in dem sich zwei Hülsen (10, 13) befinden, wobei eine erste der Hülsen (10) mit einem ersten Gehäuseteil (15a) fest verbunden ist und eine zweite der Hülsen (13) mit einem zweiten Gehäuseteil (15b) fest verbunden ist und die erste Hülse (10) mit einem Cladding (B) des Lichtwellenleiters und die zweite Hülse (13) mit einer Umhüllung (28, D) des Lichtwellenleiters fest verbunden ist, wobei zwischen den Hülsen (10, 13) ein Bereich (Z) des Lichtwellenleiters (LWL) definiert ist, in dem der Lichtwellenleiter mit der Umhüllung (28, D) vorhanden ist, wobei der Lichtwellenleiter in diesem Bereich (Z) seine Krümmung verändern und sich die Umhüllung (28, D) in axialer Richtung in Bezug auf das Cladding (B) und die erste Hülse (10) verschieben kann, **dadurch gekennzeichnet, dass** sich die die Umhüllung (28, D) bis in einen Hohlraum (22) der ersten Hülse (10) erstreckt.

2. Verwendung einer Übertragungsstrecke nach Anspruch 1 zur Übertragung von Laserstrahlung.

3. Verwendung nach Anspruch 2, **gekennzeichnet durch** die Übertragung von Laserstrahlung eines Faserlasers.

## Claims

1. Transmission system for laser radiation or radiation of some other kind (light), having a light guide and at least one plug-in connector having a housing in which there are two sleeves (10, 13), a first one (10) of the sleeves being solidly connected to a first part (15a) of the housing and a second one (13) of the sleeves being solidly connected to a second part (15b) of the housing and the first sleeve (10) being solidly connected to a cladding (B) of the light guide and the second sleeve (13) being solidly connected to a jacket (28, D) of the light guide, there being defined between the sleeves (10, 13) a region (Z) of the light guide (LWL) in which the light guide and the jacket (28, D) are present, the light guide being able to change its curvature in this region (Z) and the jacket (28, D) being able to move relative to the cladding (B) and the first sleeve (10) in the axial direction, **characterised in that** the jacket (28, D) extends into a cavity (22) in the first sleeve (10).

2. Use of a transmission system according to claim 1 to transmit laser radiation.

3. Use according to claim 2, **characterised by** the transmission of laser radiation from a fibre laser.

## Revendications

1. Trajet de transmission pour un rayonnement laser ou un autre rayonnement (lumière) avec un guide d'ondes et au moins un connecteur enfichable avec un boîtier, dans lequel se trouvent deux douilles (10, 13), une première desdites douilles (10) étant fermement reliée à une première partie de boîtier (15a) et une secondes desdites douilles (13) étant fermement reliée à une seconde partie de boîtier (15b), la première douille (10) étant fermement reliée à un revêtement (B) du guide d'ondes et la seconde douille (13) étant fermement reliée à une enveloppe (28, D) du guide d'ondes, dans lequel entre les douilles (10, 13) est définie une région (Z) du guide d'ondes (LWL) dans laquelle le guide d'ondes est présent avec l'enveloppe (28, D), et dans cette région (Z) le guide d'ondes modifie sa courbure et l'enveloppe (28, D) peut se déplacer en direction axiale par rapport au revêtement (B) et à la première douille (10),
**caractérisé en ce que** l'enveloppe (28, D) s'étend jusque dans une cavité (22) de la première douille (10).

2. Utilisation d'un trajet de transmission selon la revendication 1 pour la transmission d'un rayonnement laser.

3. Utilisation selon la revendication 2, **caractérisé par** la transmission du rayonnement laser d'un laser à fibre.
